Europäisches Patentamt

European Patent Office

Office européen des brevets

(11) Publication number: **0 175 975**
**B1**

(12) **EUROPEAN PATENT SPECIFICATION**

(45) Date of publication of patent specification: **02.01.91**

(21) Application number: **85111204.5**

(22) Date of filing: **05.09.85**

(51) Int. Cl.⁵: **G 21 C 7/04**

(54) **Absorber rod of soluble and burnable absorber for a nuclear reactor.**

(30) Priority: **26.09.84 US 654625**

(43) Date of publication of application:
**02.04.86 Bulletin 86/14**

(45) Publication of the grant of the patent:
**02.01.91 Bulletin 91/01**

(84) Designated Contracting States:
**BE DE FR GB IT SE**

(56) References cited:
**DE-B-1 186 565**
**FR-A-2 012 583**
**FR-A-2 439 456**
**GB-A-1 233 832**

**BOILING AND PRESSURIZED LIGHT-WATER**
**REACTORS, vol. 8, no. 1, 1964-65, pages 10,11;**
**J.S. WILEY: "Control: Soluble and burnable**
**poisons"**

(73) Proprietor: **WESTINGHOUSE ELECTRIC**
**CORPORATION**
**Westinghouse Building Gateway Center**
**Pittsburgh Pennsylvania 15222 (US)**

(72) Inventor: **Doshi, Pratap Kilachand**
**3803 Edinburg Drive**
**Murrysville Pennsylvania 15668 (US)**
Inventor: **Wilson, John Francis**
**3560 Meadowgate Drive**
**Murrysville Pennsylvania 15668 (US)**

(74) Representative: **Patentanwälte Dipl.-Ing. R.**
**Holzer Dipl.-Ing. (FH) W. Gallo**
**Ludwigstrasse 26**
**D-8900 Augsburg (DE)**

Courier Press, Leamington Spa, England.

## Description

The invention relates generally to nuclear reactors and, more particularly, to an absorber rod of a soluble and burnable absorber for use therein.

In a typical nuclear reactor. the reactor core includes a large number of fuel assemblies each of which comprises top and bottom nozzles. and a plurality of elongate, transversely spaced guide thimbles extending between the nozzles, and a plurality of transverse grids axially spaced along the guide thimbles. Each fuel assembly includes further a plurality of elongate fuel elements or rods transversely spaced apart as well as from the guide thimbles and supported by the grids between the top and bottom nozzles. The fuel rods contain fissile material, and they are grouped together in an array which is organized so as to provide in the core a neutron flux sufficient to support a high rate of nuclear fission and, thus, the release of a large amount of energy in the form of heat. A liquid coolant is pumped upwardly through the core in order to extract some of the heat generated in the core for the production of useful work.

Since the rate of heat generation in the reactor core is proportional to the nuclear fission rate and this, in turn, is determined by the neutron flux in the core, control of heat generation at reactor start-up, during its operation, and at shutdown is achieved by varying the neutron flux. Generally, this is done by absorbing excess neutrons using control rods which contain neutron absorbing material. The guide thimbles, in addition to being structural elements of the fuel assembly, also provide channels for insertion of the neutron absorber control rods within the reactor core. The level of neutron flux and, thus, the heat output of the core are normally regulated by the movement of the control rods into and from the guide thimbles.

It is conventional practice to design an excessive amount of neutron flux into the reactor core at start-up so that, as the flux is depleted over the life of the core, there will still be sufficient reactivity to sustain core operation over a long period of time. In view of this practice, in some reactor applications, burnable poison rods are inserted within the guide thimbles of some fuel assemblies to assist the control rods in the guide thimbles of other fuel assemblies in maintaining the neutron flux or reactivity of the reactor core relatively constant over its lifetime. The burnable poison rods, like the control rods, contain neutron absorber material. They differ from the control rods mainly in that they are maintained in stationary positions within the guide thimbles during their period of use in the core.

The overall advantages to be gained in using burnable poison at stationary positions in a nuclear reactor core are described in FR-A-2 439 456 or in US-A-3,510,398. Heretofore, rods containing burnable poison and intended to be stationarily positioned within the reactor core have been of the "fixed" type. Referring to a rod as being of the fixed type means that the absorber content of the burnable poison at any axial elevation on the rod is fixed by the initial loading of the material during manufacture of the rod.

The burnable poison rod in the above-mentioned documents is representative of the fixed type. A major disadvantage of the fixed type absorber rod is that not all of the poison material in the rod burns up completely or is depleted evenly. The shape of the axial depletion curve for the fixed type absorber rod is approximately the same as the axial neutron flux distribution curve averaged over the core life cycle. However, because of the lack of correspondence between the average axial distribution of neutron flux and some of the neutron flux peaks occurring in the reactor core over the life cycle of core operation, poison material at certain axial locations of the fixed type burnable poison rod is depleted more rapidly than at other locations. This results in incomplete absorber depletion at the other locations so that there is a substantial residual absorber penalty at the end of the cycle.

Consequently, a need exists for a burnable poison rod design which will have an improved fuel cycle cost benefit over the fixed design in terms of fabrication costs and length of core cycle. It is the principal object of the invention to satisfy this need.

Accordingly, the invention provides a burnable poison or neutron absorber rod as defined in claim 1, the absorber content of the material at any axial location of which is not fixed at the time of manufacture nor at any time thereafter. Instead, the absorber material can circulate so that axial zones which are depleted faster than the average (due to neutron flux peaks) can be replenished with absorber material from other axial regions of the rod having lower depletion rates. Underlying the invention is the recognition that by simply providing the absorber material in mobile rather than fixed form, it will be driven into circulation within the rod by thermal gradients which are normally present along the height of the rod. No external driving source is required. Thus, the absorber content tends to maintain a constant value over the full height of the rod as it is depleted, rather than burning out faster at certain local elevations. Since, during the manufacture of the rod, the amount of absorber material required is calculated for the peak neutron flux location, the fixed absorber rod type requires more absorber material than the circulating type embodying the invention. In contrast to the substantial residual absorber penalty experienced at the end of the core cycle upon use of the fixed absorber type, the circulating type according to the invention can be entirely depleted over its full length so that there is no significant residual absorber penalty associated with it. Summing up, and as compared to the known fixed type of absorber rod, the circulating absorber rod extends the burnup and thereby increases the cycle length. Moreover, it is felt that its fabrication costs would be less.

Broadly, then, the invention resides in an improved burnable absorber rod comprising an elongate hollow tubular member hermetically sealed at its opposite ends and containing a neutron absorber material in liquid form. The burnable absorber rod further includes means providing a hydride sink disposed at one end of the tubular member, and means providing a hydrogen getter disposed at the other end of the tubular member, both the hydride sink and hydrogen getter providing means being in communication with the interior space of the tubular member containing the liquid absorber material.

More particularly, the tubular member is formed by a tubular body of thin-wall construction, and a pair of end plugs secured to the opposite ends of the body and hermetically sealing same. The tubular body has formed therein one or more reinforcing convolutions designed to enhance the structural rigidity and integrity of the rod, thereby enabling it to better withstand high internal and external pressures acting thereon. The reinforcing convolutions can take on the shape of a recess or groove formed in the body and spiralling therealong between the ends of the tubular member. Alternatively, the convolutions may be a series of ring-like circular grooves formed in the body so as to extend circumferentially about it and spaced axially apart along the tubular member from end to end. A combination of both of these forms of convolutions may also be used. The liquid neutron absorber material is preferably boron dissolved in water, the boron being enriched with B-10 over the proportion naturally contained therein. Since the rod is designed to have absorber material at full core height during operation, the level of liquid absorber material in the rod during non-operating periods is lower so as to leave some vapor space.

A preferred embodiment of the invention will now be described, by way of example only, with reference to the accompanying drawings, in which:

Fig. 1 is an elevational view, partly in section, of a nuclear fuel assembly illustrated in vertically foreshortened form and with parts broken away for clarity; and

Fig. 2 is an enlarged, vertically foreshortened, sectional view of a burnable absorber rod embodying the invention.

In the following description, like reference characters designate like or corresponding parts throughout the several views of the drawings, and terms such as "forward", "rearward", "left", "right", "upwardly", "downwardly", and the like, are used as words of convenience not to be construed as limiting terms.

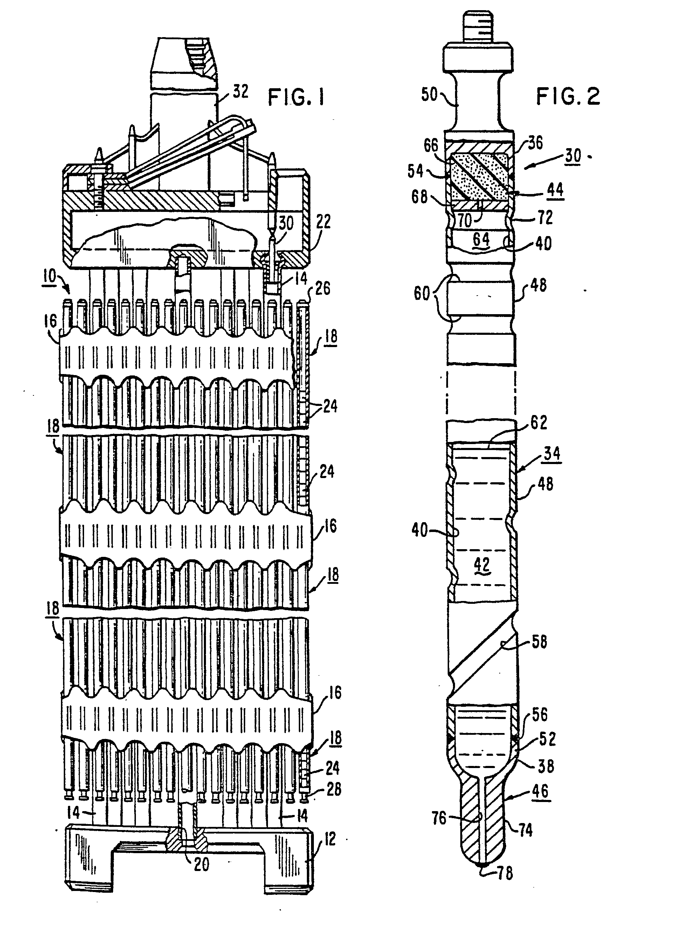

Referring now to the drawings, and particularly to Fig. 1, the fuel assembly illustrated therein and generally designated with the numeral 10 is the type used in a pressurized water reactor (PWR). Basically, it comprises a lower end structure or bottom nozzle 12 for supporting the assembly on the lower core plate (not shown) in the core region of a reactor (not shown); a plurality of guide tubes or thimbles 14 projecting upward from the bottom nozzle 12; a plurality of transverse grids 16 axially spaced along the guide thimbles 14; a plurality of elongate fuel rods 18 transversely spaced and supported by the grids 16 in an organized array; an instrumentation tube 20; and an upper end structure or top nozzle 22 attached to the upper ends of the guide thimbles 14. The fuel assembly 10 forms an integral unit capable of being conveniently handled without damaging the assembly parts.

Each of the fuel rods 18 contain nuclear fuel pellets 24 and has its opposite ends sealed by means of end plugs 26, 28. The fuel pellets 24 consist of fissile material and are the source of reactive power produced in the PWR. A liquid moderator/coolant, such as water or water containing boron, is pumped upwardly through the fuel assemblies of the core in order to extract some of the heat generated therein and to utilize it for producing useful work.

As noted hereinbefore, it is desirable in the operation of a PWR to prolong the life of the reactor core as long as feasible in order to better utilize the uranium fuel and thereby reduce fuel costs. To attain this objective, it is common practice to design an excess of reactivity initially into the reactor core and to provide means for maintaining the reactivity relatively constant over its lifetime.

The invention relates to such means in the form of an improved soluble burnable poison or neutron absorber rod 30 adapted to be inserted into one of the guide thimbles 14, as seen from Fig. 1. At least one, and preferably, several, of the rods 30 are stationarily supported, by a spider 32, in the guide thimbles 14 of some of the fuel assemblies in the reactor core (not shown) so as to assist the movable control rods in the guide thimbles of other ones of the fuel assemblies in maintaining a sub-stantially constant level of neutron flux or reactivity in the core throughout its operating cycle.

Referring now to Fig. 2, the burnable absorber rod 30 comprises an elongate hollow tubular member 34 having a hermetically sealed chamber 40 defined therein between its opposite ends 36 and 38. The sealed chamber 40 contains a neutron absorber material 42 in liquid form, and the tubular member 34 has, at its upper end, means 44 providing a hydrogen getter in communication with the chamber 40, and has, at its opposite end, means 46 providing a hydride sink, likewise in communication with the chamber 40.

The tubular member 34 is formed by a tubular body 48 and a pair of end plugs 50, 52 composed of a suitable material, preferably a zirconium-based alloy such as Zircaloy-4. The plugs 50, 52 are rigidly attached, such as by girth welds 54, 56, to the opposite ends of the tubular body 48 so as to hermetically seal the latter.

The liquid neutron absorber material 42 in the chamber 40 preferably is boron dissolved in water (boric acid), the boron being enriched with B-10 over and above the proportion naturally present in boron. The use of enriched boron material in the improved rod 30 addresses and resolves one of the concerns with the use of boron: its solubility limit in water at room temperature. Its solubility limit is approximately 15,000 ppm at 37.8°C (at 163°C the limit is 125,000 ppm). To achieve its desired function, the rod 30 would require substantially more boron loading than 15,000 ppm. For the conventional fixed type absorber rod, the loading would be about 79,000 ppm; however, the improved absorber rod 30 would require only about 64,000 ppm of natural boron (or 12,800 ppm of B-10). But this is still higher than the low temperature solubility limit. Therefore, the boron would need to be enriched in B-10 as compared to natural boron which contains about 20% B-10 (the isotope of interest). A boron concentration using 85% enriched boron would be about 15,000 ppm natural boron (12,800 ppm B-10) which would stay in solution at the lower temperature.

During normal operation of the core, temperature gradients are formed along the rod 30, with lower temperatures experienced along the lower portion of the rod and higher ones along its upper portion. Due to these temperature gradients, the liquid absorber material 42 circulates within the sealed chamber 40, and such circulation tends to self-equalize the rate of depletion of the neutron absorber material throughout the length of the chamber 40.

The tubular body 48 of the rod 30 has formed therein one or more reinforcing convolutions which enhance the structural rigidity and integrity of the rod so as to enable it to better withstand both high internal and external pressures acting on it. The reinforcing convolutions may take the shape of a recess or groove 58 formed in the body 48 and spiralling therealong between the ends of the tubular member 34. Alternatively, the convolutions may be a series of ring-like grooves 60 formed in and circumferentially about the body 48 and spaced apart axially along the tubular member 34. A combination of these forms of convolutions may also be used. The use of spiral and/or circular convolutions 58, 60 formed in the body 48 addresses and resolves another concern with the use of boron in the rod 30: how to handle the release of helium gas within the chamber 40 which results from the boron interaction with neutrons.

Parenthetically, it is noted that during non-operating periods, the liquid boron solution does not fill the chamber 40 entirely but only up to the level indicated at 62, in order to allow for changes in the specific volume of the solution recurring with changes in temperature. When going from 37.8°C to 315.6°C, water increases in volume by 45%. Since the rod 30 is designed to have absorber material at full core height during operation, the absorber column in the rod must be reduced during non-operating periods (refuelling, etc.); therefore, there is provided the vapor space 64.

Reverting now to the concern with the release of helium gas, and its solution by the use of convolutions, it should be noted that the helium released increases the end-of-life (EOL) pressure within the rod 30. The operating vapor pressure existing within the chamber 40 when the water has a temperature of 315.6°C is about 105 atmospheres. Since the EOL internal pressure must be limited to approximately the reactor coolant pressure (150 atm.) in order to avoid outward creep of the tubular body (or cladding) 48, the final pressure of the released helium and prepressurizing (backfill) gas should be about 48 atm. in order to equalize the internal pressure with the external pressure. Thus, the beginning of life (BOL) backfill pressure must be reduced to around 20 atmospheres. The reduced backfill pressure results in a fairly high external pressure acting on the body 48 at BOL which can cause creep collapse of the rod 30. This dilemma is resolved by providing the above-mentioned convolutions, i.e., the spiral groove 58 and/or the circular grooves 60, which increase the collapse strength of the tubular body 48 to BOL external pressure. If the circular grooves 60 are used, they would preferably be spaced about every 25 mm. increment on the rod 30. Calculations show that a 1 mm. deep convolution will double the collapse pressure of a 12 mm. diameter x 0.6 mm. wall tube. A 1.5 mm. deep convolution will triple the collapse pressure. In summary, therefore, the convolutions 58 and 60 add sufficient strength to the thin wall of the tubular body 48 to withstand the external pressure at BOL.

In order to reduce corrosion of the inside of the tubular member 34, its material is beta-quenched. This also reduces the hydride pick-up in the member due to free hydrogen from the oxidation process. The solid lower end plug 52 serves as the means 46 providing the hydride sink. Since this end of the member 34, being the lower one, is the cooler one, the hydrogen will tend to migrate toward it. The upper end plug 50 is an attachment fitting for connecting the rod 30 to the spider 32, and adjacent to it there is placed the hydrogen getter means 44 which takes the form of a Zircaloy sponge 66 adapted to remove hydrogen from the vapor space 64 in the chamber 40 of the member 34. The sponge 66 is supported by an annular disc 68 which has a central opening 70 for allowing passage of the hydrogen gas to the sponge 66. The disc 68 is supported by a circumferential bulge 72 formed on the inside of the body 48 of the tubular member 34.

The lower end plug 52 has a reduced-diameter end portion 74 which fits into a dashpot (not shown) provided at the bottom of the guide thimble 14 to serve as a shock absorber when the control rods are quickly inserted during a scram operation. The lower end plug 52 has a fill passage 76 extending axially through it which is used to prepressurize the rod 30 with helium and then is sealed with a weld 78.

## Claims

1. A burnable absorber rod for stationary use thereof in a nuclear fuel assembly, comprising an elongate tubular member having its opposite ends hermetically sealed and defining an interior chamber which contains a neutron absorbing material, characterized in that

said neutron absorbing material (42) is a soluble material dissolved in a liquid;

said elongate tubular member (34) contains means (46) forming a hydride sink at one end of the tubular member and being in communication with said chamber (40),

said tubular member contains also a hydrogen getter (44) in the form of a sponge (66) of getter material supported adjacent an end plug (50) sealing the other end of the tubular member, said hydrogen getter also being in communication with said chamber (40), and

said tubular member (34) has a tubular body (48) of thin-wall construction having thereon reinforcing formations (58 and/or 60) increasing the withstand strength of the tubular member to external pressure.

2. A burnable absorber rod according to claim 1, characterized in that the neutron absorbing liquid (42) is boric acid enhanced with a B-10 isotope.

3. A burnable absorber rod according to claim 1 or 2, characterized in that the means (46) forming a hydride sink is in the form of an end plug (52) which hermetically seals said one end of the tubular member (34).

4. A burnable absorber rod according of any claims 1 to 3, characterized in that said sponge (66) of getter material is supported on a retainer (68) which is supported on a circumferential bulge (72) formed on the inner wall of the tubular member (34).

5. A burnable absorber rod according to claim 4, characterized in that said retainer (68) is a disk having therethrough an opening (70) which communicates with said chamber (40).

6. A burnable absorber rod according to any of claims 1 to 5, characterized in that said reinforcing formations of said tubular body are convolutions (58) in the form of a groove spiralling said tubular body (48) substantially from end to end of the tubular member (34).

7. A burnable absorber rod according to any of claims 1 to 5, characterized in that said reinforcing formations on said tubular body are circular grooves (60) formed circumferentially on said tubular body (48) and spaced apart axially thereon.

**Patentansprüche**

1. Abbrennbarer Absorberstab zur stationären Anwendung in einem Kernbrennelement, wobei der Absorberstab ein längliches rohrförmiges Bauteil aufweist, dessen gegenüberliegenden Enden hermetisch abgedichtet sind und welcher eine innere Kammer bildet, welche neutronenabsorbierendes Material enthält, dadurch gekennzeichnet, daß

das neutronenabsorbierende Material (42) ein in einer Flüssigkeit aufgelöstes lösliches Material ist;

das längliche rohrförmige Bauteil (34) Mittel (46) aufweist, die an einem Ende des rohrförmigen Bauteils einen Hydridsumpf bilden und mit der Kammer (40) in Strömungsverbindung stehen,

das rohrförmige Bauteil auch einen Wasserstoffgetter (44) in Form eines Schwammes (66) aus Gettermaterial aufweist, welches an einer Endkappe (50) angrenzend gehaltert ist und das andere Ende des rohrförmigen Teils abdichtet, wobei der Wasserstoffgetter auch mit der Kammer (40) in Strömungsverbindung steht, und

das rohrförmige Bauteil (34) ein rohrförmiges Gehäuse (48) aus einer dünnwandigen Konstruktion aufweist welche mit Verstärkungen (58 und/oder 60) versehen ist, welche die Widerstandsfähigkeit des rohrförmigen Bauteils gegenüber Außendruck erhöhen.

2. Abbrennbarer Absorberstab nach Anspruch 1, dadurch gekennzeichnet, daß die neutronenabsorbierende Flüssigkeit (42) mit einem B-10 Isotop angereicherte Borsäure ist.

3. Abbrennbarer Absorberstab nach Anspruch 1 oder 2, dadurch gekennzeichnet, daß die eine Hydridsumpf bildenden Mittel (46) in Form einer Endkappe (52) vorliegen und das eine Ende des rohrförmigen Bauteils (34) hermetisch abdichten.

4. Abbrennbarer Absorberstab nach einem der Ansprüche 1 bis 3, dadurch gekennzeichnet, daß der aus Gettermaterial bestehende Schwamm (66) an einer Halterung (68) gehaltert ist, welche sich an einem an der Innenwand des rohrförmigen Bauteils (34) gebildeten Umfangswulst (72) abstützt.

5. Abbrennbarer Absorberstab nach Anspruch 4, dadurch gekennzeichnet, daß die Halterung (68) eine Scheibe mit einer Öffnung (70) ist, welche mit der Kammer (40) in Strömungsverbindung steht.

6. Abbrennbarer Absorberstab nach einem der Ansprüche 1 bis 5, dadurch gekennzeichnet, die Verstärkungen des rohrförmigen Gehäuses Windungen (58) in Form von Vertiefungen sind, welche im wesentlichen zwischen beiden Enden des rohrförmigen Bauteils (34) am rohrförmigen Gehäuse (48) spiralförmig verlaufen.

7. Abbrennbarer Absorberstab nach einem der Ansprüche 1 bis 5, dadurch gekennzeichnet, daß die Verstärkungen am rohrförmigen Gehäuse kreisförmige Vertiefungen (60) sind, welche am Umfang des rohrförmigen Gehäuses (48) eingearbeitet sind und mit axialem Abstand voneinander angeordnet sind.

**Revendications**

1. Barre d'absorbeur consommable à utiliser de manière fixe dans un assemblage combustible nucléaire, comprenant un élément tubulaire allongé dont les extrémités opposées sont hermétiquement scellées et formant une chambre intérieure qui contient une matière d'absorption des neutrons, caractérisée en ce que

cette matière (42) d'absorption des neutrons est une matière soluble dissoute dans un liquide;

cet élément tubulaire allongé (34) contient un moyen (46) constituant une source d'hydrure à une extrémité de l'élément tubulaire et communiquant avec la chambre (40);

cet élément tubulaire contient également un dégazeur (44) d'hydrogène sous forme d'éponge (66) de matière de dégazage supportée au voisinage d'un bouchon (50) d'extrémité scellant l'autre extrémité de l'élément tubulaire, ce dégazeur d'hydrogène communiquant également avec la chambre (40); et,

cet élément tubulaire (34) comporte un corps tubulaire (48) construit en paroi mince et doté de conformations de renfort (58 et(ou) 60) augmentant la résistance de l'élément tubulaire à la pression extérieure.

2. Barre d'absorbeur consommable suivant la revendication 1, caractérisée en ce que le liquide (42) d'absorption des neutrons est de l'acide borique enrichi en isotope $^{10}$B.

3. Barre d'absorbeur consommable suivant la revendication 1 ou 2, caractérisée en ce que le moyen (46) constituant une source d'hydrure est en forme de bouchon (52) d'extrémité qui scelle hermétiquement cette extrémité de l'élément tubulaire (34).

4. Barre d'absorbeur consommable suivant l'une quelconque des revendications 1 à 3, caractérisée en ce que cette éponge (66) de matière de dégazage est supportée par une pièce de retenue (68) laquelle s'appuie sur un renflement circonférentiel (72) formé sur la paroi intérieure de l'élément tubulaire (34).

5. Barre d'absorbeur consommable suivant la revendication 4, caractérisée en ce que cette pièce de retenue (68) est un disque percé d'une ouverture (70) qui communique avec la chambre (40).

6. Barre d'absorbeur consommable suivant l'une quelconque des revendications 1 à 5, caractérisée en ce que les conformations de renfort du corps tubulaire sont des circonvolutions (58) en forme de gorge s'enroulant en hélice le long du corps tubulaire (48) sensiblement d'une extrémité à l'autre de l'élément tubulaire (34).

7. Barre d'absorbeur consommable suivant l'une quelconque des revendications 1 à 5, caractérisée en ce que les conformations de renfort du corps tubulaire sont des gorges circulaires (60) formées circonférentiellement sur l'élément tubulaire (48) à une certaine distance axiale les unes des autres.

FIG. 1

FIG. 2